# EUROPÄISCHE PATENTSCHRIFT

(11) **EP 3 686 465 B1**
(45) Veröffentlichungstag und Bekanntmachung des Hinweises auf die Patenterteilung: **26.07.2023**
(21) Anmeldenummer: 20152380.0
(22) Anmeldetag: 17.01.2020
(51) Int. Cl.: F16K 11/07, F16K 31/06

(54) **SCHNELLSCHALTVENTIL**
QUICK SWITCH VALVE
VANNE À ACTION RAPIDE

(30) Priorität: 25.01.2019 DE 102019200940
(43) Veröffentlichungstag der Anmeldung: 29.07.2020
(73) Patentinhaber: Robert Bosch GmbH, 70442 Stuttgart (DE)
(72) Erfinder: Gold, Theodor, 97753 Karlstadt (DE); Beck, Thorsten, 97782 Graefendorf (DE); Meyer, Frank, 97070 Wuerzburg (DE)

(56) Entgegenhaltungen:
- EP-A1- 3 118 497
- WO-A1-2018/016462
- DE-A1- 10 125 811
- DE-A1-102009 060 032
- DE-A1-102016 107 773
- US-A- 4 155 535

## Beschreibung

Die Erfindung betrifft ein Schnellschaltventil gemäß dem Oberbegriff des Patentanspruchs 1.

Bei Absperrventilen in Schieberbauweise ist es bekannt, dass ein Elektromagnet den in einer Ventilbohrung angeordneten Ventilschieber entweder gegen die Kraft einer Rückstellfeder in eine Öffnungsrichtung verschiebt (NC = normally closed), oder dass der Elektromagnet den Ventilschieber gegen die Kraft der Rückstellfeder in eine Schließrichtung verschiebt (NO = normally open).

Die US 4,155,535 offenbart einen Ventilschieber, dessen Nut zulaufseitig und ablaufseitig jeweils einen Kegelabschnitt aufweist. Beide Kegelabschnitte sind schwach geneigt und symmetrisch zueinander angeordnet.

Es sind Schnellschaltventile in den beiden oben genannten Bauweisen bekannt, die bei einer Verschiebung des Ventilschiebers in Öffnungsrichtung gleichzeitig eine erste Verbindung von einem Zulaufkanal zu einem ersten Ablaufkanal und eine zweite Verbindung von demselben Zulaufkanal zu einem zweiten Ablaufkanal aufsteuern. Die beiden Ablaufkanäle sind stromab des Schnellschaltventils wieder miteinander verbunden. Dazu hat der Ventilschieber zwei axial zueinander benachbarte Hälse bzw. umlaufende Nuten, zwischen denen der Zulaufkanal in die Ventilbohrung einmündet. Nach der Öffnung des Schnellschaltventils werden beide Nuten in axialer Richtung durchströmt. Durch den zweifachen Öffnungsquerschnitt wird ein prompter und großer Volumenstrom durch das geöffnete Schnellschaltventil auch bereits nach einer geringen Öffnungsbewegung ermöglicht.

Die Druckschrift DE 2009 060 032 A1 offenbart ein derartiges Schnellschaltventil, dessen Ventilgehäuse in Patronen- bzw. Cartridge-Bauweise ausgeführt ist, so dass die beiden Ablaufanschlüsse und der dazwischen angeordnete Zulaufanschluss am Außenumfang des im Wesentlichen kreiszylindrischen Ventilgehäuses angeordnet sind. Eine erste Nut wird vom Zulaufkanal zum ersten Ablaufkanal in einer Öffnungsrichtung des Ventilschiebers axial durchströmt, während eine zweite Nut vom Zulaufkanal zum zweiten Ablaufkanal in Schließrichtung des Ventilschiebers axial durchströmt wird.

Durch die gegensinnige Durchströmung der beiden Nuten heben sich hydrodynamische Axialkräfte an dem Ventilschieber teilweise gegenseitig auf, so dass der Kraft- bzw. Energiebedarf zur Verschiebung des Ventilschiebers minimiert ist. Durch die gleichartige Gestaltung der beiden Nuten sind die hydrodynamischen Axialkräfte im voll geöffneten Zustand des Schnellschaltventils gleich, da beide Nuten gleichartig bzw. gleichförmig durchströmt werden.

Dem gegenüber liegt der Erfindung die Aufgabe zu Grunde, ein Schnellschaltventil zu schaffen, bei dem die Öffnungsbewegung unterstützt wird.

Diese Aufgabe wird gelöst durch ein Schnellschaltventil mit den Merkmalen des Patentanspruchs 1.

Weitere vorteilhafte Ausgestaltungen der Erfindung sind in den abhängigen Patentansprüchen beschrieben.

Das beanspruchte Schnellschaltventil hat eine Ventilbohrung, in der ein Ventilschieber geführt ist. Der Ventilschieber weist an seinem Außenumfang eine erste Nut und eine axial dazu beabstandete zweite Nut auf, die auch als Hälse bezeichnet werden können. Das Schnellschaltventil hat einen gemeinsamen Zulaufkanal, der in einer Schließstellung des Ventilschiebers nur mit einer Nut in fluidischer Verbindung ist, und der in einer Öffnungsstellung des Ventilschiebers mit beiden Nuten in fluidischer Verbindung ist. In der Öffnungsstellung ist die erste Nut in eine Schließrichtung zu einem ersten Ablaufkanal durchströmbar, während die zweite Nut in eine (der Schließrichtung entgegen gesetzten) Öffnungsrichtung zu einem zweiten Ablaufkanal durchströmbar ist. Erfindungsgemäß ist in einem Übergangsbereich von der ersten Nut zu einer ablaufseitigen Steuerkante der ersten Nut ein ablaufseitiger Kegelabschnitt gebildet, dessen Neigungswinkel weniger als 40 Grad gegenüber einer Längsachse des Ventilschiebers beträgt. Damit wird bei der Durchströmung der ersten Nut eine gegenüber dem Stand der Technik verringerte Axialkraft in der Schließrichtung erzeugt. Damit ist ein Schnellschaltventil geschaffen, bei dem die Öffnungsbewegung unterstützt wird.

Es hat sich gezeigt, dass der Neigungswinkel des ablaufseitigen Kegelabschnitts vorzugsweise 25 bis 35 Grad, besonders bevorzugt etwa 30 Grad gegenüber der Längsachse des Ventilschiebers betragen sollte.

Erfindungsgemäß ist in einem Übergangsbereich von einer zulaufseitigen Steuerkante der ersten Nut in die erste Nut ein zulaufseitiger Kegelabschnitt gebildet, dessen Neigungswinkel weniger als 90 Grad gegenüber der Längsachse des Ventilschiebers beträgt. Bei der Durchströmung der ersten Nut in Schließrichtung wird über diesen zulaufseitigen Kegelabschnitt eine Axialkraft in Öffnungsrichtung erzeugt. Insbesondere ist diese Axialkraft gegenüber derjenigen des Standes der Technik erhöht. Damit wird die Öffnungsbewegung weiter unterstützt.

Es hat sich gezeigt, dass der Neigungswinkel des zulaufseitigen Kegelabschnitts vorzugsweise 50 bis 70 Grad, besonders bevorzugt etwa 60 Grad gegenüber der Längsachse des Ventilschiebers betragen sollte.

Zwischen dem zulaufseitigen Kegelabschnitt und dem ablaufseitigen Kegelabschnitt ist erfindungsgemäß noch ein mittlerer Kegelabschnitt gebildet. Vorzugsweise ist dessen Erstreckung entlang der Längsachse größer als die Erstreckungen des zulaufseitigen Kegelabschnitts und des ablaufseitigen Kegelabschnitts.

Es hat sich gezeigt, dass der Neigungswinkel des mittleren Kegelabschnitts weniger als 10 Grad, vorzugsweise etwa 6 Grad, gegenüber der Längsachse des Ventilschiebers betragen sollte.

Zwischen dem zulaufseitigen Kegelabschnitt und der zulaufseitigen Steuerkante kann noch eine Ringstirnfläche ähnlich dem Stand der Technik angeordnet sein, die einen Neigungswinkel von etwa 90 Grad gegenüber der Längsachse des Ventilschiebers hat. Die Ringstirnfläche ist auf Grund des Vorhandenseins des zulaufseitigen Kegelabschnitts deutlich kleiner, als diejenige des Standes der Technik.

Bei einer Weiterbildung der ersten Nut sind zwischen dem zulaufseitigen Kegelabschnitt und dem mittleren Kegelabschnitt ein kreiszylindrischer Abschnitt mit keiner Neigung gegenüber der Längsachse vorgesehen. Zwischen dem zulaufseitigen Kegelabschnitt und dem kreiszylindrischen Abschnitt und/oder zwischen dem mittleren Kegelabschnitt und dem ablaufseitigen Kegelabschnitt sind / ist vorzugsweise Verrundungen / eine Verrundung vorgesehen.

Besonders bevorzugt ist das Schnellschaltventil in Normally-Open-Bauweise ausgeführt, so dass ein Aktor in die Schließrichtung wirkt, während die Kraft einer Rückstellfeder in die Öffnungsrichtung wirkt. Damit unterstützt die erfindungsgemäße Formgebung der ersten Nut die Rückstellfeder des Schnellschaltventils, wenn diese das geschlossene Schnellschaltventil schnell öffnen soll.

Wenn der Aktor ein Elektromagnet ist, unterstützt die erfindungsgemäße Formgebung der ersten Nut die Rückstellfeder des Schnellschaltventils, wenn diese nach Abschalten des Elektromagneten dessen Remanenzmagnetismus überwinden und das geschlossene Schnellschaltventil schnell öffnen soll.

Bezüglich der zweiten Nut wird es bevorzugt, wenn ein Übergangsbereich von einer zulaufseitigen Steuerkante in die zweite Nut eine zulaufseitige Ringstirnfläche mit einem Neigungswinkel von etwa 90 Grad gegenüber der Längsachse des Ventilschiebers aufweist, und/oder wenn ein Übergangsbereich zu einer ablaufseitigen Steuerkante der zweiten Nut eine ablaufseitige Ringstirnfläche mit einem Neigungswinkel von etwa 90 Grad gegenüber der Längsachse des Ventilschiebers aufweist. Damit ist der Volumenstrom über die zweite Nut bereits bei minimalem Öffnungshub maximal.

Zwischen den beiden Ringstirnflächen ist ein kreiszylindrischer Abschnitt mit keiner Neigung gegenüber der Längsachse vorgesehen. Zwischen dem kreiszylindrischen Abschnitt und jeder Ringstirnfläche ist eine Verrundung vorgesehen. Jede dieser Verrundungen kann zwei ähnliche aber verschiedene Verrundungsradien aufweisen.

Bei einer bevorzugten Weiterbildung des erfindungsgemäßen Schnellschaltventils ist in dessen Ventilgehäuse, in dem auch die Ventilbohrung gebildet ist, mindestens ein Entlüftungskanal vorgesehen, über den ein Ankerraum mit einer Außenseite des Ventilgehäuses verbunden ist. Darüber kann nach der Montage des Schnellschaltventils der nicht vermeidbare Lufteinschluss aus dem Ankerraum nach außen gefördert werden. Dabei dringt statt der Luft Fluid (insbesondere Druckmittel, z.B. Öl) in den Ankerraum ein. Dies dient der Schaltzeitstabilisierung, in dem der Drift der Schaltzeit reduziert wird.

Wenn das Ventilgehäuse in Cartridge- bzw. Patronenbauweise ausgebildet ist, kann der Entlüftungskanal gerade und/oder parallel zum Ventilschieber angeordnet sein und stirnseitig an der Außenseite münden.

Ein Ausführungsbeispiel des erfindungsgemäßen Schnellschaltventils ist in den Figuren dargestellt.

Es zeigen
Figur 1 in einem Längsschnitt das erfindungsgemäße Schnellschaltventil gemäß dem Ausführungsbeispiel,
Figur 2 einen Bereich des Längsschnitts des Schnellschaltventils aus Figur 1 in einem geöffneten Zustand,
Figur 3 einen Bereich des Längsschnitts des Schnellschaltventils aus Figur 1 in einem geschlossenen Zustand,
Figur 4 in einer Vergrößerung einen Bereich des Längsschnitts des Schnellschaltventils aus Figur 2 im geöffneten Zustand,
Figur 4a in einer Vergrößerung eine erste Nut des Ventilschiebers aus den vorhergehenden Figuren, und
Figur 4b in einer Vergrößerung einen ablaufseitigen Übergangsbereich einer zweiten Nut des Ventilschiebers aus den vorhergehenden Figuren.

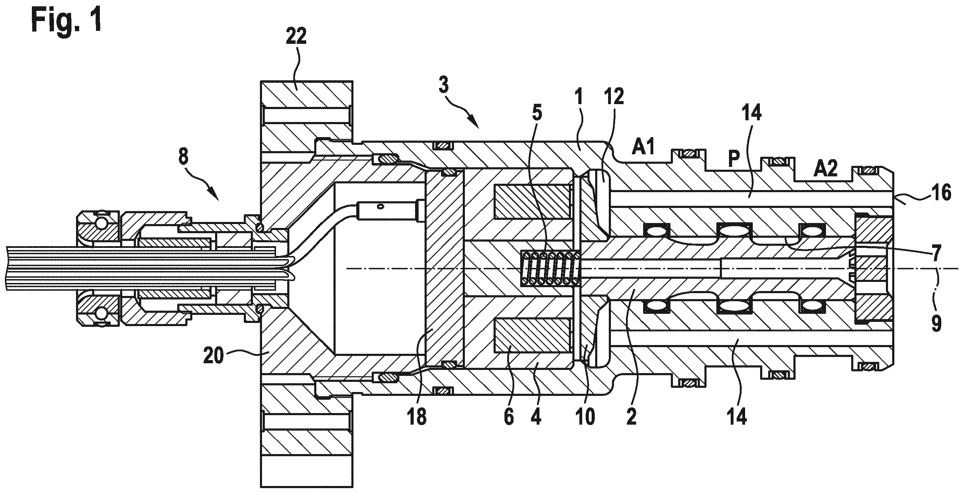

Figur 1 zeigt das Ausführungsbeispiel des erfindungsgemäßen Schnellschaltventils in einem Längsschnitt. Das Schnellschaltventil hat ein hülsenförmiges im Wesentlichen rotationssymmetrisches Ventilgehäuse 1, in dessen Ventilbohrung 7 ein Ventilschieber 2 über einen Elektromagneten 3 gegen die Kraft einer Rückstellfeder 5 verschiebbar ist. Genauer gesagt kann der Ventilschieber 2 entlang seiner Längsachse 9 über den Elektromagneten 3 aus der in der Figur 1 gezeigten geöffneten Stellung gegen die Kraft der Rückstellfeder 5 (in Figur 1 nach links) in eine geschlossene Stellung gezogen. Dazu hat der Elektromagnet 3 ein Polrohr bzw. einen Magnettopf 4, in dem eine Spule 6 angeordnet ist. Bei Bestromung der Spule 6 über eine Stromversorgung 8 wird ein scheibenförmiger Flachanker 10 in Schließrichtung (in Figur 1 nach links) gezogen, der an einem Endabschnitt des Ventilschiebers 2 befestigt ist.

Der Flachanker 10 ist in einem Ankerraum 12 aufgenommen, der über gleichmäßig am Umfang des Ventilgehäuses 1 verteilte Entlüftungskanäle 14, die außerhalb der Ventilbohrung 7 und parallel zu dieser angeordnet sind, mit einer von der Stromversorgung 8 abgewandten Stirnfläche 16 des Ventilgehäuses 1 verbunden ist. Aufgrund der Konstruktion des erfindungsgemäßen Schnellschaltventils ist es nicht vermeidbar, dass sich bei der Montage im Ankerraum 12 Luft befindet. Diese kann nur durch den Betrieb des Schnellschaltventils und den anliegenden Leckagedruck von zum Beispiel 3 - 5 bar herausgefördert werden. Dies hat einen Einfluss auf den Drift der Schaltzeit über die Laufzeit, was bei den Einbaulagen "stehend" und "kopfüber" verstärkt wird. Dieser Drift muss kompensiert werden, um eine Applikation des Schnellschaltventils sicher erfüllen zu können. Durch die Entlüftungskanäle 14 wird der Austausch des Fluids (insbesondere des Druckmittels, z.B. Öl) und der montagebedingt gekapselten Luft im Ankerraum 12 deutlich verbessert, um die Luft durch das Fluid zu ersetzen. Dies dient der Schaltzeitstabilisierung während des Betriebs des Schnellschaltventils, in dem der Drift der Schaltzeit reduziert wird.

Der Elektromagnet 3 ist durch einen Deckel 18 mit einer umlaufenden Dichtung abgeschlossen, wobei der Deckel 18 über ein in den Endabschnitt des Ventilgehäuses 1 eingeschraubtes Abschlussteil 20 gegen den Elektromagneten 3 gespannt ist. Die Stromversorgung 8 des Elektromagneten 3 ist an einer äußeren Stirnfläche des Abschlussteils 20 befestigt, wobei zwei elektrische Leitungen, von denen in Figur 1 nur eine Leitung zu sehen ist, im Inneren des Abschlussteils 20 angeordnet sind.

Über einen Flansch 22, der mittels Schraubgewinde an dem Abschlussteil 20 befestigt ist, kann das Ventilgehäuse 1, das in Patronenbauweise ausgeführt ist, in einem (nicht gezeigten) Ventilblock gehalten werden. Dazu sind in der aus dem Stand der Technik (DE 10 2009 060 032 A1) bekannten Weise am Außenumfang des Ventilgehäuses 1 drei durch jeweilige Dichtungen voneinander getrennte ringförmige Anschlussbereiche A1, P, A2 vorgesehen, die mit entsprechenden Druckräumen der Ventilbohrung 7 verbunden sind.

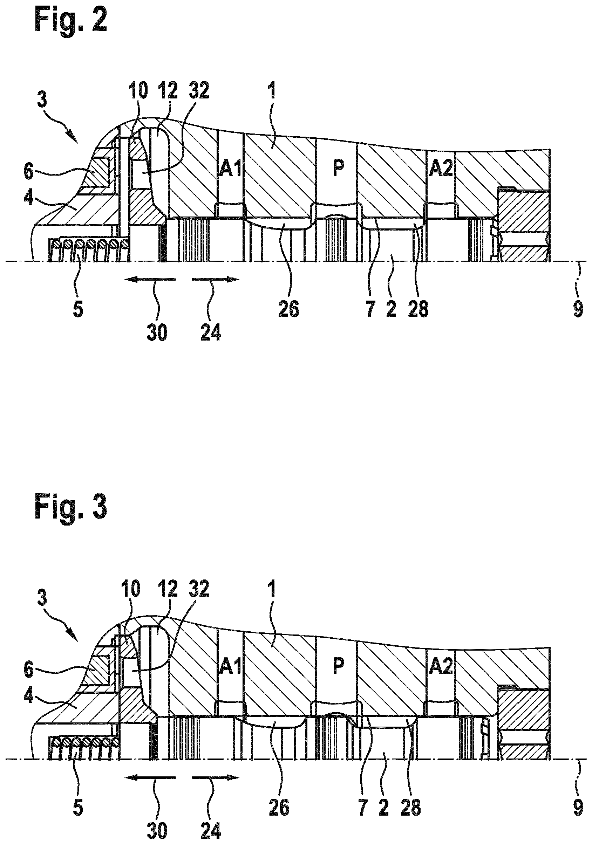

Figur 2 zeigt einen Bereich des Längsschnitts des Schnellschaltventils aus Figur 1. Dabei ist (wie auch in Figur 1) der geöffnete Zustand des Schnellschaltventils dargestellt. Dazu wurde der Ventilschieber 2 bei ausgeschaltetem Elektromagneten 3 über die Rückstellfeder 5 (in Figur 2 nach rechts) in Öffnungsrichtung 24 verschoben. Dann sind radial einmündende Zulaufkanäle P einerseits über eine erste Nut 26 mit ersten Ablaufkanälen A1 und andererseits über eine zweite Nut 28 mit zweiten Ablaufkanälen A2 verbunden. Die Nuten sind um den Ventilschieber 2 umlaufend und können auch als Hälse bezeichnet werden.

Im geöffnete Zustand werden die beiden Nuten 26, 28 axial in unterschiedlichen Richtungen 24, 30 durchströmt. Genauer gesagt wird die zweite Nut 28 in Richtung der Öffnungsrichtung 24 des Ventilschiebers 2 durchströmt, während die erste Nut 26 in eine Schließrichtung 30 durchströmt wird.

Figur 3 zeigt dem Ausschnitt des Längsschnitts gemäß Figur 2, wobei der Ventilschieber 2 in Schließrichtung 30 verschoben ist. Dazu ist der Elektromagnet 3 bestromt, so dass sein Magnettopf 4 den Flachanker 10 anzieht, der den daran befestigten Ventilschieber 2 mitnimmt. Das Fluid (insbesondere Druckmittel, z.B. Öl), das die montagebedingte Luft ersetzt hat, und das in dem keilscheibenförmigen Bereich des Ankerraumes 10 zwischen dem Magneten 3 und dem Flachanker 10 war, wird bei der Schließbewegung durch am Umfang verteilte Durchgangsausnehmungen 32 (in Figur 3 nach rechts) durch den Flachanker 10 hindurch in den Ankerraum 12 verschoben.

In dem in Figur 3 gezeigten geschlossenen Zustand des Schnellschaltventils ist die erste Nut 26 noch mit dem ersten Ablaufkanal A1 verbunden, dabei aber vom Zulaufkanal P getrennt. Weiterhin ist im geschlossenen Zustand des Schnellschaltventils der zweite Ablaufkanal 28 noch mit dem Zulaufkanal P verbunden, aber vom zweiten Ablaufkanal A1 getrennt.

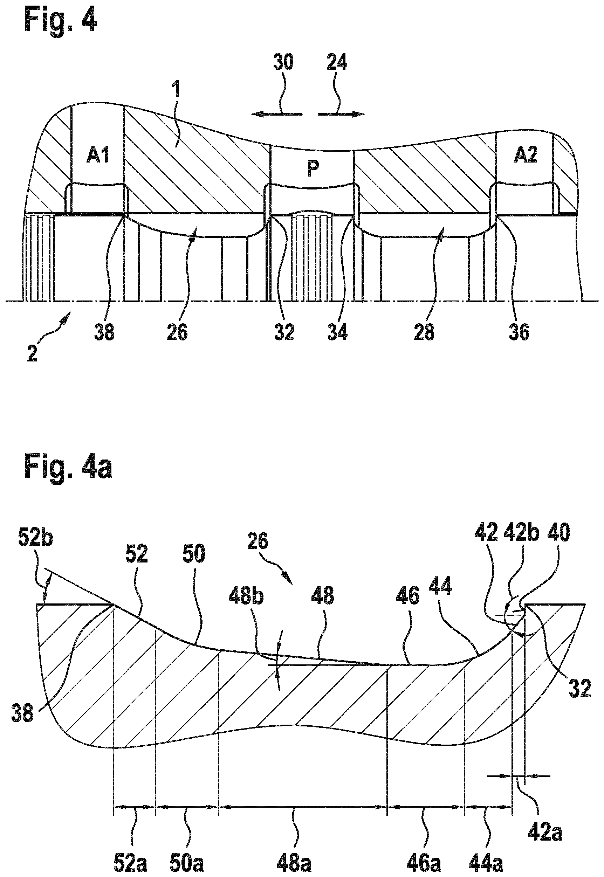

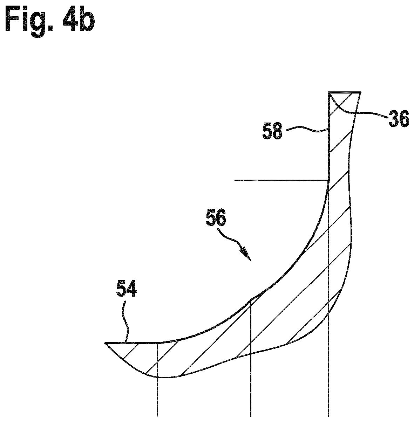

Figur 4 zeigt wiederum einer Vergrößerung aus Figur 2 mit dem geöffneten Zustand des Ventilschiebers 2. Dabei ist zu erkennen, dass die erste Nut 26 eine Formgebung aufweist, die von derjenigen der zweiten Nut 28 abweicht. Jede Nut 26, 28 erstreckt sich von einer zulaufseitigen Steuerkante 32, 34 zu einer ablaufseitigen Steuerkante 36, 38.

In Figur 4a ist die erste Nut 26 stark vergrößert dargestellt. Es ist zu erkennen, dass in Strömungsrichtung (in Figur 4a von rechts nach links betrachtet) ausgehend von der zulaufseitigen Steuerkante 32 zunächst eine Ringstirnfläche 40 vorgesehen ist, deren radiale Erstreckung vergleichsweise klein ist. Daran anschließend ist ein zulaufseitiger Kegelabschnitt 42 mit einer axialen Erstreckung 42a vorgesehen. Darauf folgt eine Verrundung 44 mit einer axialen Erstreckung 44a. Daran schließt ein Bereich mit maximaler Tiefe der Nut 26 an, der von einem kreiszylindrischen Abschnitt 46 mit einer axialen Erstreckung 46a gebildet ist.

In den nun folgenden Bereichen wird das Fluid (insbesondere Druckmittel, z.B. Öl) wieder radial nach außen geführt mit einer minimalen axialen Kraftentfaltung auf den Ventilschieber 2. Dies geschieht zunächst über einen mittleren Kegelabschnitt 48 mit einer axialen Erstreckung 48a und über eine darauf folgende Verrundung 50 mit einer axialen Erstreckung 50a und schließlich über einen ablaufseitigen Kegelabschnitt 52 mit einer axialen Erstreckung 52a. Der zulaufseitige Kegelabschnitt 42 hat einen Neigungswinkel 42b von etwa 60°, der mittlere Kegelabschnitt 48 hat einen Neigungswinkel 48b von etwa 6° und der ablaufseitige Kegelabschnitt 52 hat einen Neigungswinkel 52b von etwa 30°.

Beim gezeigten Ausführungsbeispiel gelten folgende Größenverhältnisse der axialen Erstreckungen 44a, 46a, 48a, 50a, 52a: Erstreckung 48a des mittleren Kegelabschnitts ≥ Erstreckung 46a des kreiszylindrischen Abschnitts ≥ Erstreckung 50a der Verrundung 50 ≥ Erstreckung 44a der Verrundung 44 ≥ Erstreckung 52a des ablaufseitigen Kegelabschnitts 52 ≥ Erstreckung 42a des zulaufseitigen Kegelabschnitts 42.

Figur 4b zeigt einen Ausschnitt der zweiten Nut 28. Genauer gesagt ist ein kleinerer Teil eines kreiszylindrischen Abschnitts 54 gezeigt, auf den in Strömungsrichtung (in Figur 4b von links nach rechts) folgend eine zweitteilige Verrundung 56 vorgesehen ist, deren beide Teile einen etwas unterschiedlichen Krümmungsradius haben. An den zweiten Teil der Verrundung 56 schließt eine Ringstirnfläche 58 an, auf die die ablaufseitige Steuerkante 36 der zweiten Nut 28 folgt.

Der Bereich zwischen der zulaufseitigen Steuerkante 34 der zweiten Nut 28 und dem kreiszylindrischen Abschnitt 54 der zweiten Nut 28 ist entsprechend (im Längsschnitt betrachtet spiegelsymmetrisch) gestaltet.

Mit der erfindungsgemäßen Formgebung der ersten Nut 26 mit dem Kegelabschnitt 42 und vorzugsweise mit dem deutlich schwächer geneigten mittleren Kegelabschnitt 48 und mit dem ablaufseitigen Kegelabschnitt 52 wird beim radial nach innen gerichtetem Einströmen und beim axial (in den Figuren 4 und 4a nach links gerichteten) Durchströmen der ersten Nut 26 eine erfindungsgemäße Axialkraft in Öffnungsrichtung 24 des Ventilschiebers 2 erzeugt. Damit werden die Rückstellfeder 5 (vergleiche Figuren 1 bis 3) des als normally open (NO) Ventil ausgebildeten Schnellschaltventils unterstützt und ein sicheres Öffnen nach Abschalten des Elektromagneten 3 erreicht.

Die zweite Nut 28 ist auf maximalen Durchfluss bereits bei geringem Öffnungsquerschnitt optimiert.

Offenbart ist ein Schnellschaltventil mit zwei gleichzeitig und in unterschiedlichen axialen Richtungen 24, 30 durchströmbaren Nuten 26, 28 des Ventilschiebers 2. Die erste Nut 26 ist im Hinblick auf eine Verstärkung einer Axialkraft entgegen der Durchströmungsrichtung 30 der Nut 26 optimiert. Die zweite Nut 28 ist im Hinblick auf ihren Volumenstrom bereits bei geringem Öffnungsquerschnitt optimiert. Die zweite Nut 28 kann gemäß dem Stand der Technik geformt sein.

## Patentansprüche

1. Schnellschaltventil mit einer Ventilbohrung (7), in der ein Ventilschieber (2) geführt ist, der an seinem Außenumfang eine erste Nut (26) und eine axial dazu beabstandete zweite Nut (28) aufweist, denen ein gemeinsamer Zulaufkanal (P) und ein jeweiliger Ablaufkanal (A1, A2) zugeordnet sind, wobei in einer Öffnungsstellung des Ventilschiebers (2) die erste Nut (26) in eine Schließrichtung (30) durchströmbar ist, während die zweite Nut (28) in eine der Schließrichtung (30) entgegen gesetzten Öffnungsrichtung (24) durchströmbar ist, **dadurch gekennzeichnet, dass** in einem Übergang von der ersten Nut (26) zu einer ablaufseitigen Steuerkante (38) der erste Nut (26) ein ablaufseitiger Kegelabschnitt (52) gebildet ist, dessen Neigungswinkel (52b) weniger als 40 Grad gegenüber einer Längsachse (9) des Ventilschiebers (2) beträgt, wobei in einem Übergang von einer zulaufseitigen Steuerkante (32) der ersten Nut (26) in die erste Nut (26) ein zulaufseitiger Kegelabschnitt (42) gebildet ist, dessen Neigungswinkel (42b) weniger als 90 Grad gegenüber der Längsachse (9) des Ventilschiebers (2) beträgt, und über den bei der Durchströmung der ersten Nut (26) in Schließrichtung (30) eine Axialkraft in Öffnungsrichtung (24) erzeugbar ist, wobei zwischen dem zulaufseitigen Kegelabschnitt (42) und dem ablaufseitigen Kegelabschnitt (52) ein mittlerer Kegelabschnitt (48) gebildet ist.

2. Schnellschaltventil nach Anspruch 1, wobei der Neigungswinkel (52b) des ablaufseitigen Kegelabschnitts (52) 25 bis 35 Grad gegenüber der Längsachse (9) des Ventilschiebers (2) beträgt.

3. Schnellschaltventil nach Anspruch 1, wobei der Neigungswinkel (42b) des zulaufseitigen Kegelabschnitts (42) 50 bis 70 Grad gegenüber der Längsachse (9) des Ventilschiebers (2) beträgt.

4. Schnellschaltventil nach Anspruch 1 oder 3, wobei zwischen dem zulaufseitigen Kegelabschnitt (42) und der zulaufseitigen Steuerkante (32) eine Ringstirnfläche (40) angeordnet ist, die einen Neigungswinkel von etwa 90 Grad gegenüber der Längsachse (9) des Ventilschiebers (2) hat.

5. Schnellschaltventil nach Anspruch 1, wobei ein Neigungswinkel (48b) des mittleren Kegelabschnitts (48) weniger als 10 Grad gegenüber der Längsachse (9) des Ventilschiebers (2) beträgt.

6. Schnellschaltventil nach Anspruch 1 oder 5, wobei zwischen dem zulaufseitigen Kegelabschnitt (42) und dem mittleren Kegelabschnitt (48) ein kreiszylindrischer Abschnitt (46) vorgesehen ist.

7. Schnellschaltventil nach einem der vorhergehenden Ansprüche in Normally-Open-Bauweise, wobei ein Aktor in die Schließrichtung (30) wirkt, während die Kraft einer Rückstellfeder (5) in die Öffnungsrichtung (24) wirkt.

8. Schnellschaltventil nach Anspruch 7, wobei der Aktor ein Elektromagnet (3) ist.

9. Schnellschaltventil nach einem der vorhergehenden Ansprüche, wobei ein Übergang von einer zulaufseitigen Steuerkante (34) der zweiten Nut (28) in die zweite Nut (28) eine zulaufseitige Ringstirnfläche mit einem Neigungswinkel von etwa 90 Grad gegenüber der Längsachse (9) des Ventilschiebers (2) aufweist, und/oder wobei ein Übergang der zweiten Nut (28) zu einer ablaufseitigen Steuerkante (36) der zweiten Nut (28) eine ablaufseitige Ringstirnfläche (58) mit einem Neigungswinkel von etwa 90 Grad gegenüber der Längsachse (9) des Ventilschiebers (2) aufweist.

10. Schnellschaltventil nach Anspruch 9, wobei zwischen den beiden Ringstirnflächen (58) ein kreiszylindrischer Abschnitt (54) vorgesehen ist, und wobei zwischen dem kreiszylindrischen Abschnitt (54) und jeder Ringstirnfläche (58) eine Verrundung (56) vorgesehen ist.

11. Schnellschaltventil nach einem der vorhergehenden Ansprüche, wobei in einem Ventilgehäuse (1), mindestens ein Entlüftungskanal (14) vorgesehen ist, über den ein Ankerraum (12) mit einer Außenseite des Ventilgehäuses (1) verbunden ist.

## Claims

1. Fast-switching valve having a valve bore (7) in which a valve slide (2) is guided, said valve slide having on its outer periphery a first groove (26) and a second groove (28) spaced axially apart therefrom, which grooves are assigned a common inflow channel (P) and a respective outflow channel (A1, A2), wherein, in an open position of the valve slide (2), the first groove (26) is able to be flowed in a closing direction (30) while the second groove (28) is able to be flowed in an opening direction (24), which is opposite to the closing direction (30), **characterized in that**, in a transition from the first groove (26) to an outflow-side control edge (38) of the first groove (26), there is formed an outflow-side cone portion (52) whose angle of inclination (52b) is less than 40 degrees in relation to a longitudinal axis (9) of the valve slide (2), wherein, in a transition from an inflow-side control edge (32) of the first groove (26) into the first groove (26), there is formed an inflow-side cone portion (42) whose angle of inclination (42b) is less than 90 degrees in relation to the longitudinal axis (9) of the valve slide (2) and via which, during the flow through the first groove (26) in the closing direction (30), an axial force in the opening direction (24) is able to be generated, wherein a middle cone portion (48) is formed between the inflow-side cone portion (42) and the outflow-side cone portion (52).

2. Fast-switching valve according to Claim 1, wherein the angle of inclination (52b) of the outflow-side cone portion (52) is 25 to 35 degrees in relation to the longitudinal axis (9) of the valve slide (2).

3. Fast-switching valve according to Claim 1, wherein the angle of inclination (42b) of the inflow-side cone portion (42) is 50 to 70 degrees in relation to the longitudinal axis (9) of the valve slide (2).

4. Fast-switching valve according to Claim 1 or 3, wherein an annular end face (40) is arranged between the inflow-side cone portion (42) and the inflow-side control edge (32) and has an angle of inclination of approximately 90 degrees in relation to the longitudinal axis (9) of the valve slide (2).

5. Fast-switching valve according to Claim 1, wherein an angle of inclination (48b) of the middle cone portion (48) is less than 10 degrees in relation to the longitudinal axis (9) of the valve slide (2).

6. Fast-switching valve according to Claim 1 or 5, wherein a circular-cylindrical portion (46) is provided between the inflow-side cone portion (42) and the middle cone portion (48).

7. Fast-switching valve according to one of the preceding claims with a normally-open design, wherein an actuator acts in the closing direction (30) while the force of a restoring spring (5) acts in the opening direction (24).

8. Fast-switching valve according to Claim 7, wherein the actuator is an electromagnet (3).

9. Fast-switching valve according to one of the preceding claims, wherein a transition from an inflow-side control edge (34) of the second groove (28) into the second groove (28) has an inflow-side annular end face with an angle of inclination of approximately 90 degrees in relation to the longitudinal axis (9) of the valve slide (2), and/or wherein a transition of the second groove (28) to an outflow-side control edge (36) of the second groove (28) has an outflow-side annular end face (58) with an angle of inclination of approximately 90 degrees in relation to the longitudinal axis (9) of the valve slide (2).

10. Fast-switching valve according to Claim 9, wherein a circular-cylindrical portion (54) is provided between the two annular end faces (58), and wherein a rounded portion (56) is provided between the circular-cylindrical portion (54) and each annular end face (58).

11. Fast-switching valve according to one of the preceding claims, wherein, in a valve housing (1), there is provided at least one venting channel (14) via which an armature chamber (12) is connected to an outer side of the valve housing (1).

## Revendications

1. Soupape de commutation rapide avec un alésage de soupape (7) dans lequel est guidé un tiroir de soupape (2) qui présente sur sa périphérie extérieure une première rainure (26) et une deuxième rainure (28) espacée axialement de celle-ci, auxquelles sont associés un canal d'entrée (P) commun et un canal de sortie (A1, A2) respectif, la première rainure (26) pouvant être traversée par un courant dans une direction de fermeture (30) dans une position d'ouverture du tiroir de soupape (2), tandis que la deuxième rainure (28) peut être traversée par un courant dans une direction d'ouverture (24) opposée à la direction de fermeture (30), **caractérisée en ce que** dans une transition de la première rainure (26) à une arête de commande côté sortie (38) de la première rainure (26) est formée une section conique côté sortie (52), dont l'angle d'inclinaison (52b) est inférieur à 40 degrés par rapport à un axe longitudinal (9) du tiroir de soupape (2), une section conique côté entrée (42) étant formée dans une transition d'une arête de commande côté entrée (32) de la première rainure (26) dans la première rainure (26), dont l'angle d'inclinaison (42b) est inférieur à 90 degrés par rapport à l'axe longitudinal (9) du tiroir de soupape (2), et par lequel une force axiale peut être produite dans la direction d'ouverture (24) lors du passage du courant dans la première rainure (26) dans la direction de fermeture (30), une section conique centrale (48) étant formée entre la section conique côté entrée (42) et la section conique côté sortie (52).

2. Soupape de commutation rapide selon la revendication 1, dans laquelle l'angle d'inclinaison (52b) de la section conique côté sortie (52) est de 25 à 35 degrés par rapport à l'axe longitudinal (9) du tiroir de soupape (2) .

3. Soupape de commutation rapide selon la revendication 1, dans laquelle l'angle d'inclinaison (42b) de la section conique côté entrée (42) est de 50 à 70 degrés par rapport à l'axe longitudinal (9) du tiroir de soupape (2) .

4. Soupape de commutation rapide selon la revendication 1 ou 3, dans laquelle une surface frontale annulaire (40) est disposée entre la section conique côté entrée (42) et l'arête de commande côté entrée (32), qui a un angle d'inclinaison d'environ 90 degrés par rapport à l'axe longitudinal (9) du tiroir de soupape (2).

5. Soupape de commutation rapide selon la revendication 1, dans laquelle un angle d'inclinaison (48b) de la section conique centrale (48) est inférieur à 10 degrés par rapport à l'axe longitudinal (9) du tiroir de soupape (2) .

6. Soupape de commutation rapide selon la revendication 1 ou 5, dans laquelle une section cylindrique circulaire (46) est prévue entre la section conique côté entrée (42) et la section conique centrale (48).

7. Soupape de commutation rapide selon l'une quelconque des revendications précédentes, de construction normalement ouverte, dans laquelle un actionneur agit dans la direction de fermeture (30), tandis que la force d'un ressort de rappel (5) agit dans la direction d'ouverture (24).

8. Soupape de commutation rapide selon la revendication 7, dans laquelle l'actionneur est un électro-aimant (3).

9. Soupape de commutation rapide selon l'une quelconque des revendications précédentes, dans laquelle une transition d'une arête de commande côté entrée (34) de la deuxième rainure (28) dans la deuxième rainure (28) présente une surface frontale annulaire côté entrée avec un angle d'inclinaison d'environ 90 degrés par rapport à l'axe longitudinal (9) du tiroir de soupape (2), et/ou dans laquelle une transition de la deuxième rainure (28) à une arête de commande côté sortie (36) de la deuxième rainure (28) présente une surface frontale annulaire côté sortie (58) avec un angle d'inclinaison d'environ 90 degrés par rapport à l'axe longitudinal (9) du tiroir de soupape (2).

10. Soupape de commutation rapide selon la revendication 9, dans laquelle une section cylindrique circulaire (54) est prévue entre les deux surfaces frontales annulaires (58), et dans laquelle un arrondi (56) est prévu entre la section cylindrique circulaire (54) et chaque surface frontale annulaire (58).

11. Soupape de commutation rapide selon l'une quelconque des revendications précédentes, dans laquelle il est prévu, dans un boîtier de soupape (1), au moins un canal d'aération (14) par lequel une chambre d'induit (12) est reliée à un côté extérieur du boîtier de soupape (1).
